# EUROPÄISCHE PATENTSCHRIFT

(11) **EP 2 206 074 B1**
(45) Veröffentlichungstag und Bekanntmachung des Hinweises auf die Patenterteilung: **15.05.2013**
(21) Anmeldenummer: 08842161.5
(22) Anmeldetag: 16.10.2008
(51) Int. Cl.: G06K 9/00, B60Q 1/14

(54) **VERFAHREN ZUR ADAPTIVEN BESTIMMUNG EINES SCHWELLWERTS ZUR ERKENNUNG VON FAHRZEUGLICHTERN MIT EINEM KAMERASYSTEM**
METHOD FOR THE ADAPTIVE DETERMINATION OF A THRESHOLD VALUE FOR IDENTIFYING VEHICLE HEADLIGHTS USING A CAMERA SYSTEM
PROCÉDÉ DE DÉTERMINATION ADAPTATIVE D'UNE VALEUR-SEUIL POUR IDENTIFIER DES FEUX DE POSITION DE VÉHICULE AVEC UN SYSTÈME PHOTOGRAPHIQUE

(30) Priorität: 25.10.2007 DE 102007051387
(43) Veröffentlichungstag der Anmeldung: 14.07.2010
(73) Patentinhaber: ADC Automotive Distance Control Systems GmbH, 88131 Lindau (DE)
(72) Erfinder: KRÖKEL, Dieter, 88097 Eriskirch (DE); FECHNER, Thomas, 88142 Wasserburg (DE); ALMEIDA, Carlos, 88131 Lindau (DE); SCHAALE, Christian, 88138 Weissensberg (DE)
(74) Vertreter: Büchner, Jörg
(86) Internationale Anmeldenummer: PCT/DE2008/001675
(87) Internationale Veröffentlichungsnummer: WO 2009/052786

(56) Entgegenhaltungen:
- EP-A- 1 837 803
- US-A1- 2004 069 931

## Beschreibung

Die Erfindung betrifft ein Verfahren zur Bestimmung mindestens eines Schwellwerts zur Unterscheidung von entgegenkommenden Fahrzeuglichtern und Reflektoren bei Dunkelheit gemäß dem Oberbegriff von Anspruch 1 auf dem Gebiet der automatischen Lichtsteuerung in Kraftfahrzeugen.

Die Erkennung von Fahrzeugen bei Nacht wird insbesondere bei einer automatischen Lichtsteuerung in einem Fahrzeug benötigt. Ziel einer automatischen Lichtsteuerung ist es, die Intensität und/oder Richtung der eigenen Fahrzeugscheinwerfer derart zu steuern, dass andere Verkehrsteilnehmer nicht geblendet werden.
Ein wichtiges Merkmal zur Erkennung von Fahrzeugen mittels einer Kamera bei Dunkelheit ist die Fahrzeugbeleuchtung von entgegenkommenden Fahrzeugen, die sich im Kamerabild durch Punkte hoher Intensität abbildet.

WO 2008/064621 A1 zeigt ein Verfahren zur Erkennung von Reflektoren und Fahrzeuglichtern mit einem Kamerasensorsystem in einer Fahrzeugumgebung. Hierzu wird eine Bilderfolge der Fahrzeugumgebung aufgenommen. Zumindest ein Lichtpunkt in der Bilderfolge wird verfolgt (getrackt). Die Intensität des Lichtpunkts in der Bilderfolge wird bestimmt und analysiert. Lichtpunkte oberhalb eines ersten Schwellwerts werden als Fahrzeuglichter und Lichtpunkte unterhalb eines zweiten Schwellwerts werden als Reflektoren erkannt.

Es zeigt sich, dass dieses Verfahren mit fest vorgegebenen Schwellwerten bei einzelnen Exemplaren eines kommerziell erhältlichen Bildsensors nicht die gewünschte Zuverlässigkeit bei der Erkennung von Fahrzeuglichtern bzw. Reflektoren liefert.
Dies liegt zum einen daran, dass jedes Exemplar eines Bildsensors eine geringfügig unterschiedliche Sensitivität aufweist. Zum anderen treten Änderungen der Sensitivität im Laufe der Zeit bei jedem Bildsensor auf. Dies können sowohl Verschlechterungen der Sensitivität durch Degradation insbesondere der Farbfilter (Bayer-Pattern) als auch Erhöhungen der Sensitivität insbesondere durch spätes Aushärten von Kunststoffen im Sichtbereich des Bildsensors sein, wodurch das Sichtfeld klarer wird.

US 2004/0069931 A1 befasst sich mit dem Problem der Schwellwestretzung zum automatischen Abblenden von Frontscheinwerfern.

EP1 837 803 A2 beschreibt der Klassifikation von Lichtpunkten mittels Verfolgung (Trucking), wobei Radial Boris Functions zur Klassifikations benutzt werden.

Aufgabe der vorliegenden Erfindung ist ein Verfahren, das eine erhöhte Zuverlässigkeit der Unterscheidung zwischen entgegenkommenden Fahrzeuglichtern und Reflektoren für Bildsensoren mit unterschiedlicher Sensitivität über einen langen Zeitraum bietet.

Die Aufgabe wird durch ein Verfahren mit den Merkmalen des Anspruchs 1 gelöst. Vorteilhafte Weiterbildungen der Erfindung ergeben sind aus den Unteransprüchen, wobei auch Kombinationen und Weiterbildungen einzelner Merkmale miteinander denkbar sind.

Das erfindungsgemäße Verfahren zur Bestimmung mindestens eines Schwellwerts zur Unterscheidung von Reflektoren und Fahrzeuglichtern bei Dunkelheit, die als Lichtpunkte von einem in die Umgebung eines Fahrzeugs ausgerichteten Kamerasensor aufgenommen werden, umfasst die nachfolgend genannten Schritte.

Der Kamerasensor nimmt eine Serie von Bildern der Fahrzeugumgebung auf. Zumindest ein Lichtpunkt in der Bilderserie wird verfolgt (getrackt). Aus Messwerten wie beispielsweise der Intensität des Lichtpunkts in jedem Bild wird nachträglich, das heißt nach der abgeschlossenen Verfolgung eines Lichtpunkts, mindestens ein Parameter des Lichtpunkts in der Bilderserie bestimmt. Geeignete Parameter sind beispielsweise die mittlere Intensität des Lichtpunkts, die maximale Intensität des Lichtpunkts in der gesamten Bilderserie oder die Lebensdauer des Lichtpunkts. Die maximale Intensität entspricht insbesondere für entgegenkommende Fahrzeuge typischerweise der Endintensität. Die Lebensdauer ergibt sich aus der Anzahl der Einzelbilder, in denen der Lichtpunkt getrackt wird.

Der Schwellwert zur Unterscheidung von Reflektoren und Fahrzeuglichtern bei Dunkelheit wird im Folgenden an den bzw. die ermittelten Parameter angepasst. Dazu wird eine Häufigkeitsverteilung über den mindestens einen Parameter von mehreren über mehrere Bilder verfolgten Lichtpunkten aufgestellt. Der ermittelte Parameterwert dieses Lichtpunkts wird in eine Häufigkeitsverteilung der Parameterwerte aus früher verfolgten Lichtpunkten aufgenommen. Aus der aktualisierten Häufigkeitsverteilung der Parameterwerte wird ein neuer Schwellwert zur Unterscheidung von Fahrzeuglichtern und Reflektoren ermittelt. Diese Schwellwertbestimmung geht von unterschiedlichen Eigenschaften der Parameterwerte für Fahrzeuglichter und Reflektoren aus.

Aufgrund der Tatsache, dass Fahrzeuglichter schon in großer Entfernung erkannt werden, weisen Lichtpunkte von Fahrzeuglichtern eine längere Lebensdauer sowie eine höhere Endintensität (maximale Intensität) gegenüber anderen Lichtpunkten im Bild auf. Reflektoren werden hingegen erst im Nahbereich erfasst und besitzen daher eine kürzere Lebensdauer als Fahrzeuglichter. Auch ist die maximale Intensität von Lichtpunkten von Reflektoren in der Regel niedriger als die von Fahrzeuglichtern.

Unter Berücksichtigung dieser oder vergleichbarer unterschiedlicher Eigenschaften wird ein optimaler Schwellwert für die zuverlässige Entscheidung anhand der vorliegenden Häufigkeitsverteilung ermittelt. Bei der Berücksichtigung von mehreren Parametern ist der Schwellwert von mehreren Parametern abhängig, der Schwellwert nimmt dann die Form einer Grenzlinie oder -fläche an.

Nach einer zeitlichen Filterung, insbesondere einer zeitlichen Tiefpassfilterung, wird der Schwellwert zur Unterscheidung von Reflektoren und Fahrzeuglichtern neu festgesetzt. Durch die zeitliche Filterung wird der Schwellwert an die aktuell vorliegende Situation angepasst. Einzelne Ausreißer von ermittelten Parameterwerten werden dabei nicht überbewertet. Dies verhindert beispielsweise eine zeitliche Tiefpassfilterung.

Gemäß einem bevorzugten Ausführungsbeispiel wird die Häufigkeitsverteilung der ermittelten Parameterwerte für Fahrzeuglichter und für Reflektoren durch Anwendung von Methoden der Entscheidungstheorie analysiert und aus dieser Analyse der Schwellwert neu festgesetzt. Geeignete Methoden der Entscheidungstheorie sind beispielsweise die Analyse einer Kostenfunktion oder die Maximum-Likelihood-Theorie. Ziel dieser Methoden ist es, den Schwellwert so festzusetzen, dass die Anzahl an Fehlentscheidungen minimal ist.

Gemäß einer weiteren bevorzugten Ausführungsform wird als Parameter die maximale Intensität eines Lichtpunkts verwendet. Die maximale Intensität ist bezogen auf den Verlauf des ermittelten Intensitätswerts eines Lichtpunkts über alle Einzelbilder, in denen der Lichtpunkt verfolgt (getrackt) wurde.

Gemäß einer weiteren bevorzugten Ausführungsform wird als zweiter Parameter die Lebensdauer eines Lichtpunkts verwendet.

Die Erfindung schließt eine Vorrichtung zur Unterscheidung von Reflektoren und Fahrzeuglichtern bei Dunkelheit in einem Fahrzeugumfeld ein. Die Vorrichtung umfasst einen. Kamerasensor und eine Auswerteeinheit, die die vom Kamerasensor erfassten Bilddaten auswertet und dazu eines der beschriebenen Verfahren anwendet.

Die Vorteile der Erfindung sind die hohe Anpassungsfähigkeit an mit der Zeit auftretende Parameterverschiebungen aufgrund von Materialveränderungen im Bereich des Kamerasensors und/oder davorliegendem Glas wie z.B. der Windschutzscheibe. Für jedes einzelne Sensorexemplar kann mit Hilfe des Verfahrens ein angepasster Schwellwert ermittelt werden. Die Anpassung ist kostengünstig und zuverlässig. Auch eine Anpassung an unterschiedlich helle Reflektoren und/oder Fahrzeugscheinwerfer in diversen Ländern wird durch das erfindungsgemäße Verfahren ermöglicht.

Im Folgenden wird die Erfindung anhand von Ausführungsbeispielen und Zeichnungen näher erläutert.
Fig. 1 zeigt schematisch eine mögliche Häufigkeitsverteilung der maximalen Intensitäten von Lichtpunkten.
Fig. 2 zeigt schematisch eine mögliche Verteilung von maximalen Intensitäten und Lebensdauern von Lichtpunkten.
Fig. 3 zeigt ein Flussdiagramm des Verfahrens zur Bestimmung mindestens eines Schwellwerts zur Unterscheidung von Reflektoren und Fahrzeuglichtern bei Dunkelheit.

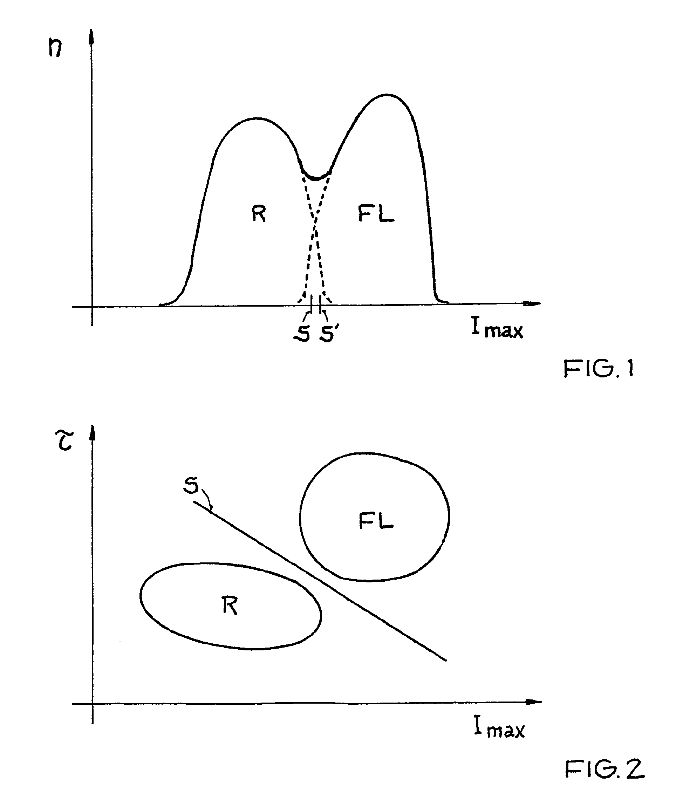

Eine schematische Häufigkeitsverteilung der ermittelten maximalen Intensitäten von Lichtpunkten in Fig. 1 veranschaulicht ein erstes Ausführungsbeispiel der Erfindung. Aufgetragen ist die Anzahl n der Lichtpunkte mit einer maximalen Intensität Iₘₐₓ.
Die maximale Intensität Iₘₐₓ eines Lichtpunkts ist dabei bezogen auf den Verlauf des ermittelten Intensitätswerts eines Lichtpunkts über alle Einzelbilder, in denen der Lichtpunkt verfolgt (getrackt) wurde. Die Verteilung weist zwei deutlich erkennbare Maxima und ein dazwischenliegendes Minimum auf.

Da die maximale Intensität Iₘₐₓ eines Lichtpunkts, der von einem entgegenkommenden Fahrzeuglicht herrührt, in den allermeisten Fällen größer ist als die maximale Intensität Iₘₐₓ eines Lichtpunkts, der von einem Reflektor stammt, wird das Maximum mit der größeren maximalen Intensität Iₘₐₓ Fahrzeuglichtern (FL) zugeordnet und das andere Maximum Reflektoren (R).

Die Häufigkeitsverteilung wird nun ausgewertet mit dem Ziel, einen Schwellwert zu bestimmen, der die beiden Bereiche (FL) und (R) der maximalen Intensitäten Iₘₐₓ für Fahrzeuglichter und Reflektoren voneinander trennt. Eine erste Möglichkeit besteht beispielsweise darin, die maximale Intensität Iₘₐₓ des Minimums der Verteilung als Schwellwert S festzusetzen.
Auf diese Weise könnte auch ohne vorherige Kenntnis eines geeigneten Schwellwerts S ein solcher bestimmt werden. Die Voraussetzung dazu ist, dass eine ausreichende Häufigkeitsverteilung bereits ermittelt wurde.
Eine alternative Möglichkeit zur Ermittlung eines Schwellwerts S' besteht darin, eine Verteilung der maximalen Intensitäten Iₘₐₓ für Fahrzeuglichter und eine für Reflektoren anzunehmen und diese an die ermittelte Gesamtverteilung anzupassen (Fitverfahren). Dies würde den beiden gepunktet dargestellten Kurvenverläufen entsprechen. Ein geeigneter Schwellwert S' wäre dann insbesondere der Intensitätswert Iₘₐₓ, bei dem beide Lichtpunktursachen gleich häufig sind, also der Schnittpunkt der beiden Einzelverteilungen (gestrichelten Linien).

Fig. 2 zeigt schematisch die Verteilung der Lichtpunkte auf die Achsen Lebensdauer τ und maximale Intensität des Lichtpunkts. Im dargestellten Fall befinden sich alle Lichtpunkte innerhalb von zwei gegeneinander abgegrenzten Gebieten. Da Reflektoren erst im Nahbereich des eigenen Fahrzeugs erfasst werden, besitzen sie eine kürzere Lebensdauer τ als Fahrzeuglichter, die schon in großer Entfernung detektiert werden. Wie Fig. 1 zu entnehmen ist, weisen Fahrzeuglichter eine hohe Endintensität auf, also eine hohe maximale Intensität Iₘₐₓ im Verlauf ihrer Lebensdauer τ. Die maximale Intensität Iₘₐₓ von Reflektoren liegt in der Regel darunter, aber nicht immer. Auch die Lebensdauer τ kann im Einzelfall für ein Fahrzeuglicht und einen Reflektor vergleichbar sein. Werden beide Parameter berücksichtigt, wie in Fig. 2 dargestellt, lassen sich die Bildpunkte von Fahrzeuglichtern (FL) und Reflektoren (R) zuverlässiger voneinander unterscheiden, die beiden Bereiche lassen sich klar zuordnen. In der Regel überlappen die Regionen (FL) und (R) wie in Fig. 2 exemplarisch dargestellt gar nicht. Der "Schwellwert" wird zu einer Grenzlinie S, die beide Bereiche (FL) und (R) voneinander trennt. In Fig. 2 ist die Grenzlinie S als Gerade dargestellt, sie könnte auch eine Kurvenform aufweisen. Anders als in Fig. 2 dargestellt, könnten beide Bereiche (FL) und (R) auch überlappen. Eine Grenzlinie könnte dann durch das Tal zwischen beiden Gipfeln der Gesamtverteilung gelegt werden. Eine Unterscheidung anhand von zwei Parametern (Grenzlinie) wird aber gegenüber einer Unterscheidung an Hand eines Parameters (Schwellwert) stets zuverlässiger sein. Durch die Berücksichtigung von drei Parametern könnte die Zuverlässigkeit unter Umständen weiter gesteigert werden, man würde eine Grenzfläche zur Trennung der Unterräume (FL) und (R) festlegen.

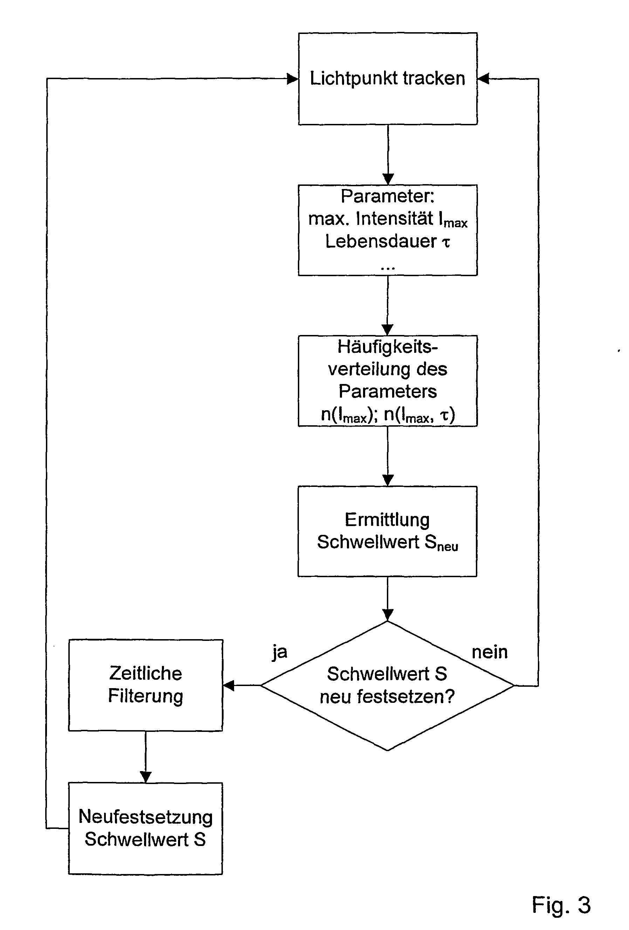

Fig. 3 zeigt ein Flussdiagramm für ein entsprechendes Verfahren zur Anpassung des Schwellwerts. Der erste Schwellwert S₀ wird plausibel vorgegeben. Er kann beispielsweise aus einer Anfangsverteilung wie sie in Fig. 1 oder Fig. 2 gezeigt ist ermittelt werden. Alternativ kann ein geeigneter Schwellwert S₀ aus einer Kalibrierung ermittelt werden, bei der die Unterscheidung zwischen Reflektoren und Fahrzeuglichtern von einem Trainer getroffen wird.

Am Anfang jedes Verfahrenszyklus wird ein Lichtpunkt getrackt. Aus Messwerten des Lichtpunkts im Verlauf der Bilderserie wird nachträglich mindestens ein Parameter wie z.B. die Lebensdauer τ oder die maximale Intensität Iₘₐₓ bestimmt.

Der ermittelte Parameterwert wird in die bisherige Häufigkeitsverteilung n aufgenommen. Denkbar ist eine kumulative Häufigkeitsverteilung n, die alle Parameterwerte seit dem Start des Verfahrens enthält. Denkbar ist aber auch eine Häufigkeitsverteilung n, die z.B. stets die letzten 1000 Parameterwerte enthält. Im nächsten Schritt wird diese Häufigkeitsverteilung n ausgewertet. Dabei können Methoden der Entscheidungstheorie zum Einsatz kommen. Es kann auch wie bei der Erläuterung zu Fig. 1 bzw. 2 beschrieben wurde vorgegangen werden. Ziel der Auswertung ist, den optimalen Schwellwert Sₙₑᵤ für die vorliegende Häufigkeitsverteilung n zu ermitteln. Stimmt der ermittelte Schwellwert Sₙₑᵤ mit bisherigen Schwellwert S überein, so ist keine Neufestsetzung erforderlich und der nächste Verfahrenszyklus beginnt. Unterscheidet sich der ermittelte Schwellwert Sₙₑᵤ vom bisherigen Schwellwert S, so wird über eine zeitliche Filterung der Schwellwert S entsprechend dem ermittelten Schwellwert Sₙₑᵤ festgesetzt und der nächste Verfahrenszyklus beginnt. Die zeitliche Filterung könnte auch anders als im Flussdiagramm dargestellt vor der Ermittlung des Schwellwerts Sₙₑᵤ durchgeführt werden.

Entscheidend ist dabei, dass der Schwellwert S bei jedem Zyklus überprüft und gegebenenfalls angepasst wird. Wenn sich zum Beispiel alle Intensitäten im Laufe der Zeit aufgrund sinkender Sensitivität des Kamerasensors erniedrigen, so wird durch dieses Verfahren auch der Schwellwert S gesenkt. Die zuverlässige Unterscheidung zwischen Fahrzeuglichtern und Reflektoren bleibt erhalten. Durch die Anpassung des Schwellwerts S ist gewährleistet, dass die automatische Lichtsteuerung zuverlässig funktioniert. Denn der Schwellwert S ist ein wesentliches Kriterium für die laufende Unterscheidung einer automatischen Lichtsteuerung: Liegt beispielsweise ein aktueller Intensitätswert eines Lichtpunkts in einem vom Kamerasensor erfassten Einzelbild erstmals oberhalb des Schwellwerts S, so wird entschieden, dass es sich bei dem Lichtpunkt nicht mehr um einen Reflektor handeln kann, sondern um ein entgegenkommendes Fahrzeuglicht und demzufolge abgeblendet werden muss.

## Patentansprüche

1. Verfahren zur Bestimmung mindestens eines Schwellwerts S zur Unterscheidung von entgegenkommenden Fahrzeuglichtern und Reflektoren bei Dunkelheit, die als Lichtpunkte von einem in die Umgebung eines Fahrzeugs ausgerichteten Kamerasensor aufgenommen werden, wobei
- der Kamerasensor eine Serie von Bildern der Fahrzeugumgebung aufnimmt,
- zumindest ein Lichtpunkt in der Bilderserie verfolgt getrackt wird,
- nachträglich, also nachdem ein Lichtpunkt in der Bilderserie vollständig verfolgt wurde, mindestens ein Parameter des Lichtpunkts in der Bilderserie bestimmt wird,
**dadurch gekennzeichnet, dass** der Schwellwert S angepasst wird, indem
- der auf diese Weise ermittelte mindestens eine Parameterwert in eine Häufigkeitsverteilung n für den Parameter von mehreren Lichtpunkten aufgenommen wird, die jeweils über mehrere Bilder verfolgt wurden,
- aus der Häufigkeitsverteilung der zuvor bestimmten Parameterwerte ein Schwellwert Sₙₑᵤ zur Unterscheidung von Fahrzeuglichtern und Reflektoren ermittelt wird,
- nach einer zeitlichen Filterung, insbesondere einer zeitlichen Tiefpassfilterung, der Schwellwert S zur Unterscheidung von Reflektoren und Fahrzeuglichtern neu festgesetzt wird.

2. Verfahren nach Anspruch 1, **dadurch gekennzeichnet, dass** aus der Häufigkeitsverteilung n der zuvor bestimmten Parameterwerte durch Anwendung von Methoden der Entscheidungstheorie der Schwellwert Sₙₑᵤ zur Unterscheidung von Reflektoren und Fahrzeuglichtern ermittelt wird.

3. Verfahren nach Anspruch 1 oder 2, **dadurch gekennzeichnet, dass** als Parameter die maximale Intensität Iₘₐₓ eines Lichtpunkts verwendet wird.

4. Verfahren nach Anspruch 3, **dadurch gekennzeichnet, dass** als zweiter Parameter die Lebensdauer τ eines Lichtpunkts verwendet wird.

5. Vorrichtung zur Unterscheidung von Reflektoren und Fahrzeuglichtern bei Dunkelheit in einem Fahrzeugumfeld umfassend einen Kamerasensor und eine Auswerteeinheit, **dadurch gekennzeichnet, dass** die Auswerteeinheit die vom Kamerasensor erfassten Bilddaten durch ein Verfahren entsprechend einem der Ansprüche 1 bis 4 auswertet.

## Claims

1. A method for determining at least one threshold value S for distinguishing, in the dark, between oncoming vehicle lights and reflectors that are recorded as light spots by a camera sensor oriented towards the surroundings of a vehicle, wherein
- the camera sensor records a series of images of the surroundings of the vehicle,
- at least one light spot in the series of images is tracked,
- subsequently, that is, after one light spot in the series of images has been tracked completely, at least one parameter of the light spot in the series of images is determined,
**characterized in that**
the threshold value S is adapted by
- including the at least one parameter value determined in this manner in a frequency distribution n for the parameter of multiple light spots that have been tracked over multiple images,
- determining, from the frequency distribution of the previously determined parameter values, a threshold value Sₙₑᵤ for distinguishing between vehicle lights and reflectors,
- fixing, after temporal filtering, particularly after temporal lowpass filtering, a new threshold value S for distinguishing between reflectors and vehicle lights.

2. The method according to claim 1, **characterized in that** the threshold value Sₙₑᵤ for distinguishing between reflectors and vehicle lights is determined from the frequency distribution n of the previously determined parameter values by applying methods of decision theory.

3. The method according to claim 1 or 2, **characterized in that** the maximum intensity Iₘₐₓ of a light spot is used as a parameter.

4. The method according to claim 3, **characterized in that** the lifetime τ of a light spot is used as a second parameter.

5. A device for distinguishing between reflectors and vehicle lights in the dark in the surroundings of a vehicle, comprising a camera sensor and an evaluation unit, **characterized in that** the evaluation unit evaluates, by a method according to any one of claims 1 to 4, the image data acquired by the camera sensor.

## Revendications

1. Procédé de définition d'au moins une valeur de seuil S pour la distinction de réflecteurs et de feux de véhicule arrivant en face dans l'obscurité qui sont enregistrés en tant que points lumineux par un capteur de caméra orienté vers l'environnement d'un véhicule,
- le capteur de caméra enregistrant une série d'images de l'environnement du véhicule,
- au moins un point lumineux dans la série d'image étant suivi/pisté,
- au moins un paramètre du point lumineux dans la série d'images étant défini ultérieurement, c'est-à-dire après qu'un point lumineux dans la série d'images a été suivi complètement,
**caractérisé en ce que**
la valeur de seuil S est adaptée par le fait que
- la valeur de paramètre au moins au nombre de un déterminée de cette façon est enregistrée dans une distribution de fréquence n pour le paramètre de plusieurs points lumineux qui ont été respectivement suivis sur plusieurs images,
- à partir de la distribution de fréquence des valeurs de paramètre définies préalablement, une valeur de seuil Sₙₑᵤ est déterminée pour à distinction de feux de véhicule et de réflecteurs,
- après un filtrage temporel, en particulier un filtrage passe-bas temporel, la valeur de seuil S pour la distinction de réflecteurs et de feux de véhicule est de nouveau fixée.

2. Procédé selon la revendication 1, **caractérisé en ce que**, à partir de la distribution de fréquence n des valeurs de paramètre définies préalablement par l'utilisation de méthodes de la théorie de distinction, la valeur de seuil Sₙₑᵤ pour la distinction de réflecteurs et de feux de véhicule est déterminée.

3. Procédé selon la revendication 1 ou 2, **caractérisé en ce que** l'intensité maximale Iₘₐₓ d'un point lumineux est utilisée comme paramètre.

4. Procédé selon la revendication 3, **caractérisé en ce que** la durée de vie τ d'un point lumineux est utilisée en tant que deuxième paramètre.

5. Dispositif pour la distinction de réflecteurs et de feux de véhicule dans l'obscurité dans un environnement de véhicule, comprenant un capteur de caméra et une unité d'analyse, **caractérisé en ce que** l'unité d'analyse analyse les données d'image détectées par le capteur de caméra par un procédé selon une des revendications 1 à 4.
